# EUROPÄISCHE PATENTSCHRIFT

(11) **EP 0 305 710 B1**
(45) Veröffentlichungstag und Bekanntmachung des Hinweises auf die Patenterteilung: **27.04.1994**
(21) Anmeldenummer: 88111449.0
(22) Anmeldetag: 16.07.1988
(51) Int. Cl.: F16K 31/42, B60T 8/36, F15B 13/043

(54) **Elektromagnetisch betätigbare Ventileinrichtung**
Electromagnetically actuated valve device
Dispositif de soupape actionné électromagnétiquement

(30) Priorität: 02.09.1987 DE 3729222
(43) Veröffentlichungstag der Anmeldung: 08.03.1989
(73) Patentinhaber: WABCO Vermögensverwaltungs-GmbH, D-30432 Hannover (DE)
(72) Erfinder: Friederichs, Otto, Dipl.-Ing., D-3008 Garbsen 1 (DE); Lichtenberg, Wolfgang, Dipl.-Ing. (FH), D-3000 Hannover 91 (DE)
(74) Vertreter: Schrödter, Manfred, Dipl.-Ing.

(56) Entgegenhaltungen:
- DE-A- 2 625 962
- DE-A- 2 733 883
- DE-B- 1 187 088
- US-A- 2 989 666
- US-A- 3 563 135

## Beschreibung

Die Erfindung betrifft elektromagnetisch betätigbare Ventileinrichtungen nach den Oberbegriffen der Patentansprüche 1 und 3.

Derartige Ventileinrichtungen sind aus der DE 33 45 697 A1 bekannt. Diese zeigt in dem aus der Sicht des Betrachters linken Teil ihrer Figur eine Ventileinrichtung nach dem Oberbegriff des Patentanspruchs 1 und in deren rechtem Teil eine Ventileinrichtung nach dem Oberbegriff des Patentanspruchs 3. Als Stellglied dient jeweils eine Membran, die auf ihrer einen Seite das von der jeweils ersten Fläche eingefaßte Hauptventilglied (dort 29 bzw. 36) trägt. Die Vorsteuerkammer wird jeweils von der anderen Membranseite, welche die jeweils zweite Fläche des Stellglieds bildet, begrenzt. Die zweite Fläche ist jeweils größer als die erste Fläche. Die jeweilige Membran trägt auch ein Vorsteuerventilglied (dort 26 bzw. 9), welches mit einem, mit dem Anker des jeweiligen Betätigungsmagneten verbundenen Vorsteuerventilkörper ein Vorsteuerventil bildet, über welches die Vorsteuerkammer der links dargestellten Ventileinrichtung mit der Arbeitskammer und die Vorsteuerkammer der rechts dargestellten Ventileinrichtung mit der mit dem Auslaß verbundenen Auslaßkammer (dort 11) verbindbar sind. Durch ihre Anordnung an der Membran sind die jeweiligen Hauptventilglieder und Vorsteuerventilglieder fest derart miteinander gekoppelt, daß eine Bewegung des Hauptventilglieds in Öffnungsrichtung des Hauptventils zugleich eine Bewegung des Vorsteuerventilglieds in Schließrichtung des Vorsteuerventils ist. Der Betätigungsmagnet der Ventileinrichtungen ist jeweils ein Schaltmagnet, d. h. ein solcher, dessen Anker durch Erregung bzw. Entregung in jeweils eine Endstellung gestellt wird. Das jeweils zugeordnete Vorsteuerventil und das jeweils zugeordnete Hauptventil kennen deshalb auch nur die Stellungen "ganz offen" und "ganz zu".

Ventileinrichtungen dieser Art sind für eine feinfühlige Einstellung des Verbraucherdrucks nur bedingt geeignet, da sie bei einem größeren Druckgefälle zwischen Einlaßdruck und Verbraucherdruck bei erregtem Betätigungsmagneten über das geöffnete Hauptventil stets mit großem Durchsatz arbeiten, was zu Überschwingungen bzw. Unterschwingungen des Verbraucherdrucks führt.

Aus der EP-B-0 024 877 ist es bekannt, den Durchflußquerschnitt eines Ventils (dort 10, 18) mit beweglichem Ventilglied (dort 18) mittels eines Betätigungsmagneten mit stetiger Strom/Hub-Charakteristik feinfühlig einzustellen. Dies geschieht durch eine Verschiebung des mit dem Kern des Betätigungsmagneten verbundenen Ventilglieds, deren Größe von der Stärke des Erregerstroms abhängt. Diese Lösung ist aber wegen der mit dem Ventilquerschnitt stark anwachsenden Magnetabmessungen und -kosten sowie wegen des mit den Magnetabmessungen ansteigenden Erregerstrombedarfs praktisch nur für Ventile für kleine Durchflußmengen geeignet.

Aus der DE 33 06 317 A1 ist es bekannt, den Querschnitt eines Hauptventils feinfühlig mittels eines Vorsteuerventils mit feinfühlig einstellbarem Querschnitt zu steuern. Zu diesem Zweck weist das Vorsteuerventil eine mit dem Anker eines Betätigungsmagneten mit erregerstromabhängiger Kraftabgabe (Proportionalmagnet) verbundenes Vorsteuerventilglied (dort 34) auf. Zum Hauptventil gehört ein bewegliches Hauptventilglied, das an einem Stellglied (dort etwa 14) angeordnet ist. In Schließrichtung des Hauptventils ist das Stellglied auf einer zweiten Fläche vom Druck in einer Vorsteuerkammer (dort 24) und von einer Feder (dort 42) beaufschlagt. In Öffnungsrichtung des Hauptventils ist das Stellglied auf einer ersten Fläche vom Einlaßdruck und auf einer dritten Fläche vom Verbraucherdruck beaufschlagt. Die der zweiten Fläche zugeordnete Vorsteuerkammer ist mit einer der ersten Fläche zugeordneten Einlaßkammer (dort etwa 16) über eine Drosselverbindung (dort 20, 22) verbunden. Die Vorsteuerkammer ist andererseits über das Vorsteuerventil mit einer der dritten Fläche des Stellglieds zugeordneten Arbeitskammer (dort etwa 18) verbindbar. Beim Öffnen des Vorsteuerventils durch Erregen des Betätigungsmagneten bildet sich von einem bestimmten Öffnungsquerschnitt ab infolge Druckabfalls in der Vorsteuerkammer am Stellglied eine Überschußkraft in Öffnungsrichtung des Hauptventils. Diese Überschußkraft wirkt über die Feder unter Zusammendrückung derselben auf das Vorsteuerventilglied und den Anker des Betätigungsmagneten und schiebt diese in Schließrichtung des Vorsteuerventils zurück, bis zwischen Magnetkraft und Überschußkraft Gleichgewicht herrscht; d. h. Vorsteuerventil und Hauptventil sind hier durch Kraft gekoppelt. Bei gegebenem Erregerstrom sind die Querschnitte von Vorsteuerventil und Hauptventil also Überschußkraft- bzw. Druckdifferenzabhängig. Ist die Verbraucheranlage geschlossen, beispielsweise wie eine Bremsanlage im betätigten Zustand, d. h. ist sie bei entsprechender Betätigung bis zum Einlaßdruck auffüllbar, so kann bei dieser Ventileinrichtung bei gegebenem Erregerstrom bei einem bestimmten Verbraucherdruck die Überschußkraft so groß werden, daß zunächst das Vorsteuerventil, und anschließend, infolge des Wiederansteigens des Drucks in der Vorsteuerkammer, das Hauptventil geschlossen werden. Diese Ventileinrichtung ist also, wie die eingangs erwähnten Ventileinrichtungen, für eine feinfühlige Einstellung des Verbraucherdrucks nur bedingt geeignet.

Der Erfindung liegt die Aufgabe zugrunde, Ventileinrichtungen der eingangs genannten Arten mit einfachen Mitteln so zu verbessern, daß sie bei jedem Verhältnis des Verbraucherdrucks zum Einlaßdruck eine feinfühlige Einstellung des Verbraucherdrucks ermöglichen.

Diese Aufgabe wird durch die in den Patentansprüchen 1 und 3 angegebene Erfindung gelöst. Weiterbildungen und vorteilhafte Ausgestaltungen sind in den Unteransprüchen angegeben.

Als Druckmittelquelle kommen eine Druckmittelbeschaffungsanlage, ein Druckmittelvorrat oder eine zwischen diesen und der erfindungsgemäßen Ventileinrichtung angeordnete Absperr- oder Drucksteuereinrichtung in Frage.

Die Erfindung ermöglicht auch ein feinfühliges Einstellen der Durchflußmenge in eine offene Verbraucheranlage hinein, d. h. in eine Verbraucheranlage mit betriebsbedingt ständigem (kontinuierlichen) Druckmittelverbrauch.

Die Erfindung ist zum Einsatz mit jedem Druckmittel geeignet.

Die Erfindung läßt sich mit jeder geeigneten Art Ausbildung des Vorsteuerventils, des Hauptventils, des Stellglieds und Anordnung der Flächen am Stellglied realisieren. Beispielhaft seien für die Ventile die Formen des Schieberventils, des Sitzventils und kombinierter Ausführungen erwähnt. Das Stellglied kann beispielsweise mit gleitender Abdichtung und/oder Membranabdichtung, auch in Form eines Stufenkolbens, ausgebildet sein.

Für Ausbildungsformen der Erfindung, bei denen sich nicht vermeiden läßt, daß das Stellglied sich mit einer dritten Fläche dem Verbraucherdruck bzw. dem Druck in der Auslaßkammer aussetzt, bieten die Ausgestaltungen nach den Patentansprüchen 2 bzw. 4 Lösungen.

Die Ausgestaltung nach dem Patentanspruch 3 geht davon aus, daß in der Auslaßkammer im wesentlichen Atmosphärendruck herrscht. Dies ist beispielsweise der Fall, wenn der Auslaß direkt mit der Atmosphäre als Druckentlastungsraum verbunden ist. Liegt hingegen der Druck in der Auslaßkammer wenigstens vorübergehend - beispielsweise bei Druckspitzen - nennenswert über Atmosphärendruck, so kann es auch zur Optimierung ihrer Funktion empfehlenswert sein, die genannte Ausgestaltung nach dem Patentanspruch 4 auszubilden. Beispiele für Einsatzfälle mit einem höheren Druck in der Auslaßkammer liegen vor, wenn das Druckmittel im Druckentlastungsraum nicht auf Atmosphärendruck entspannt wird - wie insbesondere in Systemen mit anderen Druckmitteln als Luft üblich - oder wenn zwischen Auslaß und dem auf Atmosphärendruck entspannten Druckentlastungsraum Staudruck verursachende Bauteile wie längere Leitungen oder Schalldämmeinrichtungen angeordnet sind.

Unter "stetiger Hub/Strom-Charakteristik" ist zu verstehen, daß wenigstens innerhalb des Arbeitshubs des Ankers des Betätigungsmagneten, abgesehen von Ansprechstufe, Hystereseerscheinungen und dergleichen, jedem Wert des Erregerstroms ein bestimmter Hub des genannten Ankers zugeordnet ist. Diese Abhängigkeit kann beliebig sein: linear oder progressiv oder degressiv oder gemischt. Ist der Anker bei entregtem Magneten ausgefahren und wird er durch Erregung in Einzugsrichtung bewegt, ist er also ziehend, so ist die Hub/Strom-Charakteristik abfallend. Ist der Anker bei entregtem Betätigungsmagneten eingefahren und wird er durch Erregung in Ausfahrrichtung bewegt, ist er also drückend, so ist die Hub/Strom-Charakteristik ansteigend. Konstruktiv werden diese Charakteristiken z. B. dadurch erzielt, daß der Anker in geeigneter Weise durch eine Feder vorgespannt wird. Je nach Art der Hub/Strom-Charakteristik kann bzw. muß der Betätigungsmagnet ein Dauerstrom- bzw. ein Arbeitsstrommagnet sein.

Im Falle einer Ventileinrichtung nach den Patentansprüchen 2 oder 4 kann die Verbindung zwischen Arbeitskammer bzw. Auslaßkammer und Ausgleichkammer als Drosselverbindung ausgebildet sein. Das Stellglied wird dadurch in einer schnellen Druckaufbauphase hinsichtlich der Druckkräfte nur verzögert ausgeglichen mit dem Ergebnis, daß das Stellglied selbst und damit das Hauptventil eine Neigung zum Schließen erhalten, welche ihrerseits die Funktion der jeweiligen Ventileinrichtung stabilisiert.

Die Patentansprüche 9 bis 17 beschreiben in mehreren Ausbaustufen insbesondere fertigungstechnisch und damit kostengünstige körperliche Ausgestaltungen der Erfindung. Es sind aber auch andere Ausgestaltungen, beispielsweise mit Ausbildung des Stellglieds als Stufenkolben, möglich. Es liegt auch auf der Hand, daß das Hauptventilglied und das Vorsteuerventilglied zusammen oder jedes für sich ein eigenes Bauteil bilden können.

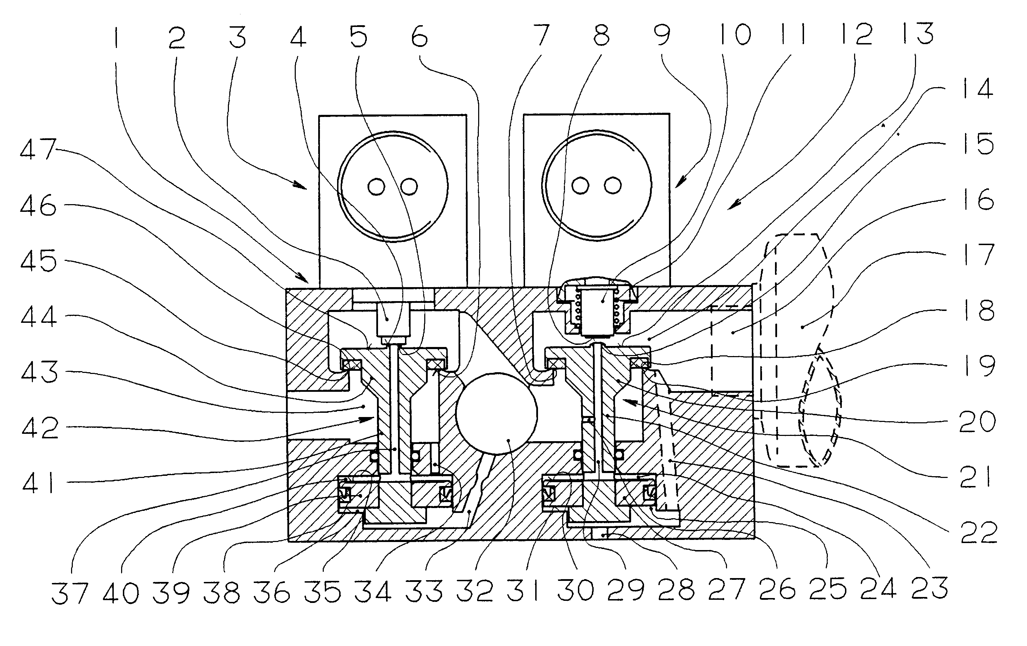

Ventileinrichtungen nach dem Patentanspruch 1 und nach dem Patentanspruch 3 können zu einer kombinierten Ventileinrichtung zusammengebaut werden. Eine solche vereinigt dann in einer kostengünstigen Bauform die Druckaufbaufunktion (Einlaßventileinrichtung) und die Druckabbaufunktion (Auslaßventileinrichtung) für eine Verbraucheranlage und bietet außerdem den Vorteil einer raumsparenden und Einbaukosten sparenden Bauweise. Für eine derartige kombinierte Ventileinrichtung gelten die in den Unteransprüchen beschriebenen Ausgestaltungsmöglichkeiten, aber auch jede geeignete andere Ausgestaltungsmöglichkeit, für jede einzelne der darin zusammengefaßten Ventileinrichtungen. Die Erfindung wird nachstehend anhand von in der Zeichnung dargestellten Ausführungsbeispielen näher erläutert.

Die Figur zeigt eine kombinierte Ventileinrichtung. Diese enthält in einem nicht näher bezeichneten Gehäuse in dem aus der Sicht des Betrachters linken Teil eine elektromagnetisch betätigbare Ventileinrichtung (1) zur Steuerung der Verbindung zwischen einer nicht dargestellten Druckmittelquelle und einer ebenfalls nicht dargestellten Verbraucheranlage und in dem rechten Teil eine elektromagnetisch betätigbare Ventileinrichtung (12) zur Steuerung der Druckentlastung der Verbraucheranlage.

In der Ventileinrichtung (1) ist zwischen einer mit der Druckmittelquelle verbundenen Einlaßkammer (43) und einer mit der Verbraucheranlage verbundenen Arbeitskammer (32) ein Hauptventil (45, 46) angeordnet. Das Hauptventil (45, 46) besteht aus einem beweglichen Hauptventilglied und einem gehäusefesten Ventilsitz (45). Zur Steuerung der Bewegung des Hauptventilglieds ist ein generell mit (42) bezeichnetes Stellglied vorgesehen.

Das Gehäuse enthält außer der Einlaßkammer (43) und der Arbeitskammer (32) eine Vorsteuerkammer (40) und eine Ausgleichskammer (36). Die Vorsteuerkammer (40) ist über eine Drosselverbindung (34) mit der Einlaßkammer (43) verbunden. Die Drosselverbindung (34) ist so bemessen, daß sie in der weiter unten beschriebenen Weise mit einem ebenfalls weiter unten beschriebenen Vorsteuerventil (4, 5) zusammenwirkt. Die Ausgleichskammer (36) ist über einen Kanal (33) mit der Arbeitskammer (32) verbunden. Der Kanal (33) ist als Drosselverbindung ausgebildet.

Das Stellglied (42) weist eine erste Fläche (6), eine zweite Fläche (35), eine dritte Fläche (47) und eine vierte Fläche (38) auf.

Auf der ersten, der Einlaßkammer (43) zugeordneten Fläche (6) ist das Stellglied (42) in Öffnungsrichtung des Hauptventils (45, 46) vom Einlaßdruck beaufschlagt.

Auf der zweiten, der Vorsteuerkammer (40) zugeordneten Fläche (35) ist das Stellglied (42) in Schließrichtung des Hauptventils (45, 46) vom Druck in der Vorsteuerkammer (40) beaufschlagt. Auf der dritten, der Arbeitskammer (32) zugeordneten Fläche (47) ist das Stellglied (42) in Schließrichtung des Hauptventils (45, 46) vom Verbraucherdruck beaufschlagt.

Auf der vierten, der Ausgleichskammer (36) zugeordneten Fläche (38) ist das Stellglied (42) vom Druck in der Ausgleichskammer (36) wieder in Öffnungsrichtung des Hauptventils (45, 46) beaufschlagt. Dieser Druck ist wegen der Ausbildung des Kanals (33) als Drosselverbindung in einer schnellen Druckaufbauphase nicht dem Verbraucherdruck in der Arbeitskammer (32) gleich; ist hingegen der Kanal (33) nicht als Drosselverbindung ausgebildet, so ist dieser Druck stets dem Verbraucherdruck gleich.

Die zweite Fläche (35) ist größer als die erste Fläche (6).

Zu ihrer elektromagnetischen Betätigung weist die Ventileinrichtung (1) einen Betätigungsmagneten (3) mit einem Anker (2) und ein (hinsichtlich der Strömungsrichtung Einlaßkammer (43) - Arbeitskammer (32) parallel zum Hauptventil (45, 46) angeordnetes) Vorsteuerventil (4, 5) auf, über welches die Vorsteuerkammer (40) mit der Arbeitskammer (32) verbindbar ist. Der Betätigungsmagnet (3) weist eine stetige Strom/Hub-Charakteristik auf. Das Vorsteuerventil (4, 5) wird von einem Vorsteuerventilglied und einem mit dem Anker (2) des Betätigungsmagneten (3) verbundenen Vorsteuerventilkörper (4) gebildet. Das Hauptventilglied und das Vorsteuerventilglied sind fest derart gekoppelt, daß eine Bewegung des Hauptventilglieds in Öffnungsrichtung des Hauptventils (45, 46) - in der Figur aufwärts gerichtet - zugleich eine Bewegung des Vorsteuerventilglieds in Schließrichtung des Vorsteuerventils (4, 5) ist.

Konstruktiv sind die vorstehend erwähnten Bauteile wie folgt ausgebildet.

Das Stellglied (42) ist als Kolben aus zwei in Reihe angeordneten, über einen Schaft (41) fest miteinander verbundenen Kolbenteilen (44 und 39) ausgebildet. An dem in der Figur oben liegenden einen Kolbenteil (44) ist (unten) die erste Fläche (6), an dem in der Figur unten liegenden anderen Kolbenteil (39) ist (oben) die zweite Fläche (35) angeordnet. Durch diese Anordnung sind die erste Fläche (6) und die zweite Fläche (35) einander zugewandt. Die erste Fläche (6) ist von einem Ventilsitz (46) eingeschlossen, der damit ihre Größe definiert und zugleich als Hauptventilglied dient. An dem einen Kolbenteil (44) ist (oben) auch die dritte Fläche (47) angeordnet. Da diese dem Verbraucherdruck in Schließrichtung des Hauptventils (45, 46) ausgesetzt ist, entsteht an ihr eine Kraft, die die weiter unten beschriebene Funktion stören würde. Um dies zu vermeiden, ist an dem anderen Kolbenteil (39) (unten) die vierte Fläche (38) angeordnet. Diese ist aus ebenfalls weiter unten dargelegten Gründen etwas größer als die dritte Fläche (47). Die dritte Fläche (47) umgibt einen Ventilsitz (5), welcher das Vorsteuerventilglied bildet. Da auf diese Weise sowohl das Vorsteuerventilglied als auch das Hauptventilglied an dem einen Kolbenteil (44) angeordnet sind, ist ihre weiter oben erwähnte feste Koppelung gegeben. Die Zuordnung der Flächen (6 bzw. 35 bzw. 47 bzw. 38) zu der jeweiligen Kammer geschieht dadurch, daß die jeweilige Fläche die jeweilige Kammer begrenzt. Innerhalb des Ventilsitzes (5) mündet ein den Schaft (41) und das eine Kolbenteil (44) durchdringender Kanal (37), der andererseits über nicht bezeichnete Querdurchbrüche mit der Vorsteuerkammer (40) verbunden ist und der bei geöffnetem Vorsteuerventil (4, 5) die Verbindung zwischen Vorsteuerkammer (40) und Arbeitskammer (32) herstellt. Das andere Kolbenteil (39) ist axial verschiebbar und abgedichtet im Gehäuse geführt und trennt durch seine nicht bezeichnete Abdichtung die Vorsteuerkammer (40) und die Ausgleichskammer (36). Die Drosselverbindung (34) zwischen Vorsteuerkammer (40) und Einlaßkammer (43) ist als Gehäusedurchbruch ausgebildet.

Der Betätigungsmagnet (3) ist mit abfallender Hub/Strom-Charakteristik ausgeführt. Diese Charakteristik wird beispielsweise in nicht dargestellter und bekannter Weise durch Vorspannung des Ankers (2) mittels einer Feder in dessen Ausfahrrichtung bewirkt. Der Betätigungsmagnet (3) ist in der Figur oberhalb des Stellglieds (42) mit aufwärts einziehbarem Anker (2) angeordnet, d. h. so, daß der Anker (2) im ausgefahrenen Zustand mit dem Vorsteuerventilkörper (4) gegen den als Vorsteuerventilglied dienenden Ventilsitz (5) und den als Hauptventilglied dienenden Ventilsitz (46) gegen den oder - je nach Höhe des Verbraucherdruckes - in Richtung des Ventilsitzes (45) drückt und dadurch das Vorsteuerventil (4, 5) schließt. Die dabei von dem Anker (2) auf das Stellglied (42) ausgeübte Kraft ist gerade so groß, daß sie das Vorsteuerventil (4, 5) sicher schließt.

Für die folgende Funktionsbeschreibung sei zunächst angenommen, daß in nicht dargestellter Weise der Betätigungsmagnet (3) mittels einer Betätigungseinrichtung mit variablem Erregerstrom erregbar sei und daß der Verbraucherdruck mittels eines Drucksensors überwacht werde, dessen druckabhängige Signale von der Betätigungseinrichtung zur Ein- oder Abschaltung und/oder zur Einstellung bzw. Nachregulierung des Erregerstroms ausgewertet werden. Eine derartige Beschaltung des Betätigungsmagneten (3) ist beispielsweise in einer elektrisch gesteuerten und/oder elektrisch geregelten (beispielsweise blockiergeschützten) Kraftfahrzeug-Bremsanlage üblich.

Solange die Betätigungseinrichtung keinen den Ansprechstrom übersteigenden Erregerstrom aussteuert, d.h. im Ruhezustand, bleiben der Anker (2) des Betätigungsmagneten (3) ausgefahren und das Vorsteuerventil (4, 5) sowie das Hauptventil (45, 46) geschlossen. Ansprechstrom ist der Erregerstrom, bei dem der Anker (2) sich gegen die Kraft der genannten Feder gerade aus der erwähnten ausgefahrenen Stellung löst. In der Vorsteuerkammer (40) steht jetzt der Einlaßdruck aus der Einlaßkammer (43) an. Am Stellglied (42) herrscht dabei, solange der Einlaßdruck höher als der Verbraucherdruck ist, durch die Anordnung und Größen der Flächen (6 bzw. 35 bzw. 47 bzw. 38) ein Druckkraftüberschuß in Richtung Schließen des Hauptventils (45, 46), der, abgesehen von einer etwaigen Überschußkraft der den Anker (2) in Ausfahrrichtung vorspannenden Feder, dessen Schließkraft darstellt. Die Schließkraft des Vorsteuerventils (4, 5) wird von dieser Feder erzeugt.

In den folgenden Ausführungen wird ausschließlich die Funktion der Ventileinrichtung oberhalb der Ansprechstufe des Betätigungsmagneten (3) betrachtet.

Bei Erregung des Betätigungsmagneten (3) wird dessen Anker (2) um einen von der Stärke des Erregerstroms bestimmten Hub eingezogen; der Betätigungsmagnet (3) ist also als Arbeitsstrommagnet eingesetzt. Durch den Einzugshub wird das Vorsteuerventil (4, 5) um einen entsprechenden Querschnitt geöffnet. Dadurch strömt Druckmittel über den Kanal (37) und das Vorsteuerventil (4, 5) aus der Vorsteuerkammer (40) in die Arbeitskammer (32) und damit in die Verbraucheranlage ab. Sind der Erregerstrom und damit der Öffnungsquerschnitt gering, kann über die Drosselverbindung (34) genau so viel Druckmittel in die Vorsteuerkammer (40) nachströmen wie über das Vorsteuerventil (4, 5) in die Verbraucheranlage abströmt; hierbei bleiben der Druck in der Vorsteuerkammer erhalten und das Hauptventil (45, 46) geschlossen, so daß die Verbraucheranlage nur eine geringe Druckmittelzufuhr mit entsprechend langsamem Verbraucherdruckanstieg erfährt.

Bei einem höheren Erregerstrom werden der Einzugshub des Magneten (2) und damit der Öffnungsquerschnitt des Vorsteuerventils (4, 5) zunächst so groß, daß durch das Vorsteuerventil (4, 5) mehr Druckmittel aus der Vorsteuerkammer (40) abströmen als über die Drosselverbindung (34) in diese nachströmen kann. Dadurch entstehen ein Druckabfall in der Vorsteuerkammer (40) und eine Überschußkraft in Öffnungsrichtung des Hauptventils (45, 46) am Stellglied (42), die durch Bewegung (Anheben) des Stellglieds (42) und damit des Hauptventilglieds (Ventilsitz 46) vom Ventilsitz (45) das Hauptventil (45, 46) öffnet. Bei dieser Öffnungsbewegung des Stellglieds (42) und damit des Hauptventilglieds wird der als Vorsteuerventilglied dienende Ventilsitz (5) in Schließrichtung des Vorsteuerventils (4, 5) mitgenommen. Die Öffnungsbewegung des Stellglieds (42) und damit des Hauptventilglieds und zugleich die Schließbewegung des Vorsteuerventilglieds kommen zum Stillstand, wenn sich der Öffnungsquerschnitt des Vorsteuerventils (4, 5) auf einen Wert verringert hat, bei dem sich trotz Abströmens von Druckmittel aus der Vorsteuerkammer (40) in die Verbraucheranlage in der Vorsteuerkammer (40) ein Druck halten kann, der das Stellglied (42) im Kräftegleichgewicht hält. Das Stellglied (42) nimmt dabei eine Schwimmstellung ein, in der sowohl das Vorsteuerventil (4, 5) als auch das Hauptventil (45, 46) geöffnet sind und die Verbraucheranlage auch über den größeren Querschnitt des letzteren mit entsprechend größerem Durchsatz und schnellerem Verbraucherdruckanstieg mit Druckmittel versorgt wird. Die Lage der Schwimmstellung und damit der Öffnungsquerschnitt des Hauptventils (45, 46) werden vom Einzugshub des Magneten (2) und damit vom Erregerstrom bestimmt. Im Rahmen des Arbeitsbereichs des Betätigungsmagneten (3), der außer durch die Ausfahrstellung durch einen Anschlag für den Anker (2) in Einzugrichtung definiert ist, können also der Öffnungsquerschnitt des Hauptventils (45, 46) und damit der Druckmitteldurchsatz in die Verbraucheranlage und die Verbraucherdruckanstiegs-Geschwindigkeit des durch die Erregerstromstärke eingestellt werden.

Der Verbraucherdruckanstieg führt auch zu einem Druckanstieg in der Vorsteuerkammer (40). Daraus wie auch aus der Beaufschlagung der dritten Fläche (47) mit dem Verbraucherdruck folgt ein Anstieg der in Schließrichtung des Hauptventils (45, 46) auf das Stellglied (42) wirkenden Kraft. Dieser Kraftanstieg wird jedoch dadurch kompensiert, daß der Verbraucherdruckanstieg sich auch in die Ausgleichkammer (36) fortpflanzt und auch auf der vierten Fläche (38) zu einem Kraftanstieg führt. Das Stellglied (42) bleibt deshalb bei geöffnetem Hauptventil (45, 46) stets im wesentlichen im Kräftegleichgewicht, so daß auch der Hauptventilquerschnitt und der Vorsteuerventilquerschnitt, die sich einmal erregerstromabhängig eingestellt haben, bei unverändertem Erregerstrom im wesentlichen erhalten bleiben.

Andererseits hat auch bei gleichbleibenden Öffnungsquerschnitten der Ventile (4, 5 bzw. 45, 46) der Verbraucherdruckanstieg einen (physikalisch bedingten) degressiven Verlauf (Abflachung) des Druckmitteldurchsatzes und damit der Verbraucherdruckanstiegs-Geschwindigkeit zur Folge.

Die Ventileinrichtung (1) ist wegen
- der erregerstromabhängigen Möglichkeit, nur das Vorsteuerventil (4, 5) zu öffnen,
- der erregerstromabhängigen Einstellbarkeit des Öffnungsquerschnitts des Hauptventils (40, 41) und
- des zuletzt erwähnten degressiven Verlaufs der Verbraucherdruckanstiegs-Geschwindigkeit bei steigendem Verbraucherdruck
zur Sicherstellung der erfindungsgemäß angestrebten feinfühligen Einstellung des Verbraucherdrucks über den gesamten Druckbereich geeignet.
Die Ventileinrichtung (1) ermöglicht beispielsweise, den Verbraucherdruckanstieg in mehrere Phasen mit unterschiedlichen Hauptventilquerschnitten und Verbraucherdruckanstiegs-Geschwindigkeiten aufzuteilen. So könnte in einer ersten Phase durch Erregung des Betätigungsmagneten mit einem hohen Erregerstrom ein schneller Verbraucherdruckanstieg bewirkt werden. Signalisiert der Drucksensor das Erreichen eines vorbestimmten Verbraucherdrucks, so könnte in einer oder mehreren weiteren Phasen die Betätigungseinrichtung den Erregerstrom auf Werte herabsetzen, bei denen der Soll-Verbraucherdruck in den Bereich mit degressivem Verlauf der Druckanstiegs-Geschwindigkeit fällt.

Signalisiert dann der Drucksensor das Erreichen des Soll-Verbraucherdrucks, so wird ein weiterer Verbraucherdruckanstieg seitens der Betätigungseinrichtung durch Abschalten des Erregerstroms und damit Schließen des Vorsteuerventils (4, 5) und des Hauptventils (45, 46) ohne nennenswertes Überschwingen unterbunden. Sollte anschließend der Verbraucherdruck unter den Sollwert fallen, so kann aufgrund des entsprechenden Signals des Drucksensors der Soll-Verbraucherdruck durch Öffnen des Vorsteuerventils (4, 5) und - je nach Verbraucherdruckabfall-Geschwindigkeit - zusätzlich auch des Hauptventils (45, 46) wiederhergestellt werden. Die Ventileinrichtung (1) ist also auch zur feinfühligen Nachführung abgefallenen Verbraucherdrucks über den gesamten Druckbereich geeignet.

Beim beschriebenen Ausführungsbeispiel ist die vierte Fläche (38) des Stellglieds (42) etwas größer als dessen dritte Fläche (47). Aus dem Verbraucherdruck wirkt deshalb am Stellglied (42) eine resultierende Kraft in Öffnungsrichtung des Hauptventils (45, 46), welche den zum Öffnen des Hauptventils (45, 46) erforderlichen Druckabfall in der Vorsteuerkammer (40) mindert und dadurch ein schnelles Ansprechen des Hauptventils (45, 46) fördert. Dieser wünschenswerte Effekt kann aber, insbesondere bei höheren Erregerströmen, insofern nachteilig sein, als er zu einem Aufreißen des Hauptventils (45, 46) und/oder zu instationären Bewegungen (Schwingungen) des Stellglieds (42) führen kann. Für Einsatzfälle, in denen dieser Nachteil untragbar ist, schafft die Ausbildung des Kanals (33) als Drosselverbindung Abhilfe; diese Ausbildung ermöglicht zwar im Ruhezustand das Entstehen der erwähnten resultierenden Kraft, baut diese jedoch in der Betriebsphase der Ventileinrichtung (1) ganz oder teilweise ab, indem sie die Fortpflanzung des Verbraucherdrucks aus der Arbeitskammer (32) in die Ausgleichkammer (36) verzögert.

Aus diesen Ausführungen geht hervor, daß in nicht näher dargestellter Weise die Ventileinrichtung für den normalen Einsatzfall auch ohne Ausbildung des Kanals (33) als Drosselverbindung darstellbar ist. Auch geht aus diesen Ausführungen hervor, daß das Ansprechverhalten des Hauptventils (45, 46) durch die Größenverhältnisse der Flächen des Stellglieds beeinflußbar ist.

In der in der rechten Figurenhälfte dargestellten Ventileinrichtung (12) ist das Hauptventil (19, 18) zwischen der Arbeitskammer (32) und einer Auslaßkammer (14) angeordnet, welche ebenfalls in dem Gehäuse vorgesehen ist. Die Auslaßkammer (14) ist an einen Auslaß (16) angeschlossen, und dieser steht mit einem Druckentlastungsraum in Verbindung.

In ihrem funktionalen und konstruktiven Aufbau gleicht die Ventileinrichtung (12), soweit nachstehend nichts anderes gesagt ist, der Ventileinrichtung (1). Ihr
Stellglied (21)
und seine Bestandteile
erste Fläche ( 7)
zweite Fläche (30)
dritte Fläche (13)
vierte Fläche (31)
ein (oben liegendes) Kolbenteil (20)
anderes (unten liegendes) Kolbenteil (27)
Schaft (22)
Kanal (29)
Hauptventilglied (Ventilsitz 18)
Vorsteuerventilglied (Ventilsitz 15)
entsprechen den gleichnamigen Positionen (42, 6, 35, 47, 38, 44, 39, 41, 37, 46 und 5) der Ventileinrichtung (1). Die gleiche Aussage gilt für die Bauteile
gehäusefester Ventilsitz (19) (des Hauptventils 19, 18)
Vorsteuerkammer (24)
Ausgleichkammer (25)
Anker (10) (des Betätigungsmagneten 9)
Vorsteuerventilkörper (8)
Vorsteuerventil (8, 15)
und die gleichnamigen Positionen (45, 40, 36, 2, 4 und 4, 5) der Ventileinrichtung (1).

In den folgenden Eigenschaften weicht die Ventileinrichtung (12) von der Ventileinrichtung (1) ab.

Die Vorsteuerkammer (24) ist mit der Arbeitskammer (32) verbunden; die dazu dienende Drosselverbindung (26) ist als im wesentlichen radial angeordneter Durchbruch in einem die Arbeitskammer (32) durchdringenden Bereich des Schafts (22) ausgebildet. Die erste Fläche (7) ist der Arbeitskammer (32) zugeordnet und dementsprechend mit dem Verbraucherdruck beaufschlagt. Die dritte Fläche (13) ist der Auslaßkammer (14) zugeordnet und dementsprechend mit deren Druck beaufschlagt. Die dritte Fläche (13), die Ausgleichskammer (25) und die dieser zugeordnete vierte Fläche (31) stellen, wie weiter unten näher erläutert wird, eine die Grundausführung der Ventileinrichtung (12) erweiternde Ausbaustufe dar, in welcher die Ausgleichskammer (25) gegenüber dem Druckentlastungsraum abgedichtet und über eine gestrichelt dargestellten Kanal (23) mit der Auslaßkammer (14) verbunden ist. In dieser Ausbaustufe wird also der Druck der Ausgleichskammer (25), der die vierte Fläche (31) beaufschlagt, der Auslaßkammer (14) entnommen. In der Grundausführung ist die Ausgleichskammer (25), wie durch einen Auslaß (28) gekennzeichnet, mit dem Druckentlastungsraum verbunden.

Der hier mit (9) bezeichnete Betätigungsmagnet ist bezüglich des Stellglieds wie der Betätigungsmagnet (3) der Ventileinrichtung (1) angeordnet, jedoch mit ansteigender Hub/Strom-Charakteristik ausgeführt. Letztere wird beispielsweise durch Vorspannung des Ankers (10) in seine Einzugsrichtung mittels einer Feder (11) bewirkt. Bei entregtem Betätigungsmagneten (9) ist der Anker (10) voll eingefahren; dadurch ist wenigstens das Vorsteuerventil (8, 15) geöffnet, so daß sich in diesem Zustand in der Verbraucheranlage kein Restdruck aufbauen oder halten kann. Dies ist beispielsweise im Falle einer Kraffahrzeug-Bremsanlage im gelösten Zustand wichtig.

Soll sich in der Verbraucheranlage und damit in der Arbeitskammer (32) ein Verbraucherdruck aufbauen und halten können, so wird der Betätigungsmagnet (9) mit höchstem Erregerstrom erregt. Dadurch werden der Anker (10) voll ausgefahren und das Vorsteuerventil (8, 15) sowie, falls geöffnet gewesen, das Hauptventil (19, 18) geschlossen. Die dabei von dem Anker (10) auf das Stellglied (21) ausgeübte Kraft ist gerade so groß, daß sie das Vorsteuerventil (8, 15) sicher schließt. Wird dieser Zustand als Ruhezustand der Ventileinrichtung (12) bezeichnet, so wirkt der Betätigungsmagnet (9) in diesen Ruhezustand also als Dauerstrommagnet.

Wird der Betätigungsmagnet (9) entregt, so entspricht jedem Entregungsgrad, abgesehen von einer durch die Schließkraft des Vorsteuerventils (8, 15) bedingten Ansprechentregung, ein Hub des Ankers (10) in seiner Einfahrrichtung und damit ein Öffnungshub des Vorsteuerventils (8, 15). Dieses Verhalten kann zur feinfühligen Druckentlastung der Verbraucheranlage ausgenutzt werden. Dabei und im Ruhezustand funktioniert die Ventileinrichtung (12) analog der Ventileinrichtung (1); sie läßt sich analog jener einsetzen und ist also auch zur feinfühligen Nachführung angestiegenen Verbraucherdrucks über den gesamten Druckbereich geeignet.

Herrscht in der Auslaßkammer (14) kein nennenswerter Überdruck, so gelten die zuletzt gemachten Aussagen schon für die Grundausführung der Ventileinrichtung (12), in welcher die dritte Fläche (13), die Ausgleichkammer (25) und die vierte Fläche (31) als nicht existent anzusehen sind. Herrscht jedoch in der Auslaßkammer (14) ein nennenswerter Überdruck oder tritt ein solcher auf, so belastet dieser in der erwähnten Grundausführung über die dritte Fläche (13) das Stellglied (21) in Schließrichtung des Hauptventils (19, 18). Herrscht der fragliche Überdruck als Dauerdruck, so kann er das Öffnen des Hauptventils (19, 18) verzögern, d.h. das Ansprechverhalten der Ventileinrichtung (12) verschlechtern. Tritt der fragliche Überdruck, etwa als Staudruck, vorübergehend auf, so kann er zu einer oder mehreren instationären Bewegungen des Stellglieds (21) und damit zum instabilen Schließen (Flattern) des Hauptventils (19, 18) führen. Ein Einsatzfall, bei dem eine Erscheinung der letztgenannten Art auftreten kann, ist durch den gestrichelt dargestellten Anschluß eines Schalldämpfers (17) am Auslaß (16) angedeutet. In diesen Fällen kann durch Erweiterung der Grundausführung um die Ausgleichkammer (25), die vierte Fläche (31) und den Kanal (23) das Stellglied (21) gegenüber dem Druck der Auslaßkammer (14) ganz oder weitgehend ausgeglichen und gegen diesen unempfindlich gemacht werden. Insbesondere, wenn der fragliche Überdruck in der Auslaßkammer (14) als Dauerdruck herrscht, kann in einer weiteren Ausbaustufe der Kanal (23) in nicht dargestellter Weise als Drosselverbindung ausgebildet werden. Dadurch werden, analog zur Ventileinrichtung (1), einerseits der die vierte Fläche (31) beaufschlagende Druck zum schnellen Öffnen des Hauptventils (19, 18) herangezogen, andererseits instationäre Bewegungen des Stellglieds (21) gedämpft bzw. unterbunden.

Der Fachmann erkennt, daß die im Zusammenhang mit der Ventileinrichtung (1) erwähnte Betätigungseinrichtung in entsprechender Anwendung auch die Steuerung der Ventileinrichtung (12) übernehmen und daß bei entsprechender Verknüpfung dieser Steuerungen die dargestellte kombinierte Ventileinrichtung hervorragend zur Regelung des Verbraucherdrucks geeignet ist.

Der Fachmann erkennt ferner, daß vorstehend gemachte abweichende Aussagen zu der einen Ventileinrichtung sich in entsprechender Anwendung auf die andere Ventileinrichtung übertragen lassen.

Es ist offensichtlich, daß sich der Anwendungsbereich der Erfindung nicht in dem beschriebenen Ausführungsbeispiel erschöpft sondern alle Ausgestaltungen umfaßt, deren Merkmale sich den Patentansprüchen unterordnen.

## Patentansprüche

1. Elektromagnetisch betätigbare Ventileinrichtung (1) zur Steuerung der Verbindung zwischen einer Druckmittelquelle und einer Verbraucheranlage mit den Merkmalen:
a) Zwischen einer mit der Druckmittelquelle verbundenen Einlaßkammer (43) und einer mit der Verbraucheranlage verbundenen Arbeitskammer (32) ist ein aus einem gehäusefesten Ventilsitz (45) und einem beweglichen Hauptventilglied (46) bestehendes Hauptventil (45, 46) angeordnet;
b) es ist ein die Bewegung des Hauptventilglieds (46) steuerndes Stellglied (42) vorgesehen;
c) es ist eine Vorsteuerkammer (40) vorgesehen;
d) das Stellglied (42) ist auf einer ersten, der Einlaßkammer (43) zugeordneten Fläche (6) in Öffnungsrichtung des Hauptventils (45, 46) vom Einlaßdruck beaufschlagt;
e) auf einer zweiten, der Vorsteuerkamme (40) zugeordneten Fläche (35) ist das Stellglied (42) in Schließrichtung des Hauptventils (45, 46) vom Druck in der Vorsteuerkammer (40) beaufschlagt;
f) die zweite Fläche (35) ist größer als die erste Fläche (6);
g) die Vorsteuerkammer (40) ist über ein Vorsteuerventil (4, 5) mit der Arbeitskammer (32) verbindbar;
h) das Vorsteuerventil (4, 5) wird von einem beweglichen Vorsteuerventilglied (5) und einem mit dem Anker (2) des Betätigungsmagneten (3) verbundenen Vorsteuerventilkörper (4) gebildet;
i) Hauptventilglied (46) und Vorsteuerventilglied (5) sind fest derart gekoppelt, daß eine Bewegung des Hauptventilglieds (46) in Öffnungsrichtung des Hauptventils (45, 46) zugleich eine Bewegung des Vorsteuerventilglieds (5) in Schließrichtung des Vorsteuerventils (4, 5) ist,
gekennzeichnet durch die Merkmale:
j) der Betätigungsmagnet (3) weist eine stetige Strom/Hub-Charakteristik auf;
k) die Vorsteuerkammer (40) ist über eine Drosselverbindung (34) mit der Einlaßkammer (43) verbunden;
l) die Drosselverbindung (34) ist so bemessen, daß sie bei geringem Öffnungsquerschnitt des Vorsteuerventils (4, 5) einen wenigstens gleich großen Druckmitteldurchsatz in die Vorsteuerkammer (40) wie das Vorsteuerventil (4, 5) aus der Vorsteuerkammer (40) und bei zunehmendem Öffnungsquerschnitt des Vorsteuerventils (4, 5) einen geringeren Druckmitteldurchsatz in die Vorsteuerkammer (40) als das Vorsteuerventil (4, 5) aus der Vorsteuerkammer (40) zuläßt.

2. Ventileinrichtung nach Anspruch 1, in der das Stellglied (42) auf einer dritten, der Arbeitskammer (32) zugeordneten Fläche (47) vom Verbraucherdruck beaufschlagt ist, gekennzeichnet durch die Merkmale:
a) die dritte Fläche (47) ist am Stellglied (42) derart angeordnet, daß der auf ihr lastende Druck das Stellglied (42) in Schließrichtung des Hauptventils (45, 46) beaufschlagt;
b) es ist eine mit der Arbeitskammer (32) verbundene Ausgleichskammer (36) vorgesehen, der eine vierte Fläche (38) des Stellglieds (42) zugeordnet ist, auf welcher das Stellglied (42) vom Druck in der Ausgleichskammer (38) in Öffnungsrichtung des Hauptventils (45, 46) beaufschlagt ist.

3. Elektromagnetisch betätigbare Ventileinrichtung (12) zur Steuerung der Druckentlastung einer Verbraucheranlage mit den Merkmalen:
a) Zwischen einer mit der Verbraucheranlage verbundenen Arbeitskammer (32) und einer mit einem Auslaß (16) verbundenen Auslaßkammer (14) ist ein aus einem gehäusefesten Ventilsitz (19) und einem beweglichen Hauptventilglied (18) bestehendes Hauptventil (19, 18) angeordnet, wobei der Auslaß (16) wenigstens mittelbar mit einem Druckentlastungsraum verbunden ist;
b) es ist ein die Bewegung des Hauptventilglieds (18) steuerndes Stellglied (21) vorgesehen;
c) es ist eine Vorsteuerkammer (24) vorgesehen;
d) das Stellglied (21) ist auf einer ersten, der Arbeitskammer (32) zugeordneten Fläche (7) in Öffnungsrichtung des Hauptventils (19, 18) vom Verbraucherdruck beaufschlagt;
e) auf einer zweiten, der Vorsteuerkamme (24) zugeordneten Fläche (30) ist das Stellglied (21) in Schließrichtung des Hauptventils (19, 18) vom Druck in der Vorsteuerkammer (24) beaufschlagt;
f) die zweite Fläche (30) ist größer als die erste Fläche (7);
g) die Vorsteuerkammer (24) ist über ein Vorsteuerventil (8, 15) mit der Auslaßkammer (14) verbindbar;
h) das Vorsteuerventil (8, 15) von einem beweglichen Vorsteuerventilglied (15) und einem mit dem Anker (10) des Betätigungsmagneten (9) verbundenen Vorsteuerventilkörper (8) gebildet;
i) Hauptventilglied (18) und Vorsteuerventilglied (15) sind fest derart gekoppelt, daß eine Bewegung des Hauptventilglieds (18) in Öffnungsrichtung des Hauptventils (19, 18) zugleich eine Bewegung des Vorsteuerventilglieds (15) in Schließrichtung des Vorsteuerventils (8, 15) ist,
gekennzeichnet durch die Merkmale:
j) der Betätigungsmagnet (9) weist eine stetige Strom/Hub-Charakteristik auf;
k) die Vorsteuerkammer (24) ist über eine Drosselverbindung (26) mit der Arbeitskammer (32) verbunden;
l) die Drosselverbindung (26) ist so bemessen, daß sie bei geringem Öffnungsquerschnitt des Vorsteuerventils (8, 15) einen wenigstens gleich großen Druckmitteldurchsatz in die Vorsteuerkammer (24) wie das Vorsteuerventil (8, 15) aus der Vorsteuerkammer (24) und bei zunehmendem Öffnugnsquerschnitt des Vorsteuerventils (8, 15) einen geringeren Druckmitteldurchsatz in die Vorsteuerkammer (24) als das Vorsteuerventil (8, 15) aus der Vorsteuerkammer (24) zuläßt.

4. Ventileinrichtung nach Anspruch 3, wobei das Stellglied (21) auf einer dritten, der Auslaßkammer (14) zugeordneten Fläche (13) vom Druck in der Auslaßkammer (14) beaufschlagt ist,
gekennzeichnet durch die Merkmale:
a) die dritte Fläche (13) ist am Stellglied (21) derart angeordnet, daß der auf ihr lastende Druck das Stellglied (21) in Schließrichtung des Hauptventils (19, 18) beaufschlagt;
b) es ist eine mit der Auslaßkammer (14) verbundene Ausgleichskammer (25) vorgesehen, der eine vierte Fläche (31) des Stellglieds (21) zugeordnet ist, auf welcher das Stellglied (21) vom Druck in der Ausgleichskammer (25) in Öffnungsrichtung des Hauptventils (19, 18) beaufschlagt ist.

5. Ventileinrichtung nach einem der Ansprüche 1 bis 4, dadurch gekennzeichnet, daß der Betätigungsmagnet (3) eine ansteigende Hub/Strom-Charakteristik aufweist, also ziehend ist.

6. Ventileinrichtung nach einem der Ansprüche 1 bis 4, dadurch gekennzeichnet, daß der Betätigungsmagnet 9 eine abfallende Hub/Strom-Charakteristik aufweist, also drückend ist.

7. Ventileinrichtung nach einem der Ansprüche 2 oder 5 bis 6, dadurch gekennzeichnet, daß die Verbindung zwischen Arbeitskammer (32) und Ausgleichkammer (36) als Drosselverbindung (Kanal 33) ausgebildet ist.

8. Ventileinrichtung nach einem der Ansprüche 4 bis 6, dadurch gekennzeichnet, daß die Verbindung zwischen Auslaßkammer (14) und Ausgleichskammer (25) als Drosselverbindung ausgebildet ist.

9. Ventileinrichtung nach einem der Ansprüche 1 bis 2 oder 5 oder 7, gekennzeichnet durch die Merkmale:
a) Das Stellglied (42) ist als Kolben aus zwei in Reihe angeordneten, durch einen Schaft (41) fest miteinander verbundenen Kolbenteilen (44) und (39) ausgebildet;
b) an dem einen Kolbenteil (44) ist die erste Fläche (6), an dem anderen Kolbenteil (39) ist die zweite Fläche (35) angeordnet, wobei die erste Fläche (6) und die zweite Fläche (35) einander zugewandt sind.

10. Ventileinrichtung nach den Ansprüchen 2 und 9, dadurch gekennzeichnet, daß an dem einen Kolbenteil (44) auch die dritte Fläche (47) und an dem anderen Kolbenteil (39) auch die vierte Fläche (38) angeordnet sind.

11. Ventileinrichtung nach einem der Ansprüche 3 bis oder 8, gekennzeichnet durch die Merkmale:
a) Das Stellglied (21) ist als Kolben aus zwei in Reihe angeordneten, durch einen Schaft (22) fest miteinander verbundenen Kolbenteilen (20 und 27) ausgebildet;
b) an dem einen Kolbenteil (20) ist die erste Fläche (7), an dem anderen Kolbenteil (27) ist die zweite Fläche (30) angeordnet, wobei die erste Fläche (7) und die zweite Fläche (30) einander zugewandt sind.

12. Ventileinrichtung nach den Ansprüchen 3 und 11, dadurch gekennzeichnet, daß an dem einen Kolbenteil (19) auch die dritte Fläche (13) und an dem anderen Kolbenteil (27) auch die vierte Fläche (31) angeordnet sind.

13. Ventileinrichtung nach einem der Ansprüche 9 oder 10, gekennzeichnet durch die Merkmale:
a) Das eine Kolbenteil (44) dient mit einem die erste Fläche (6) einschließenden Ventilsitz (46) als Hauptventilglied und zugleich als Vorsteuerventilglied;
b) der Schaft (41) und das eine Kolbenteil (44) werden von einem mit der Vorsteuerkammer (40) verbundenen und innerhalb des Vorsteuerventilglieds (Ventilsitz 5) mündenden Kanal (37) durchdrungen.

14. Ventileinrichtung nach einem der Ansprüche 11 oder 12, gekennzeichnet durch die Merkmale:
a) Das eine Kolbenteil (20) dient mit einem die erste Fläche (7) einschließenden Ventilsitz (18) als Hauptventilglied und zugleich als Vorsteuerventilglied;
b) der Schaft (22) und das eine Kolbenteil (20) werden von einem mit der Vorsteuerkammer (24) verbundenen und innerhalb des Vorsteuerventilglieds (Ventilsitz 15) mündenden Kanal (29) durchdrungen.

15. Ventileinrichtung nach den Ansprüchen 2 und 13 oder 4 und 14, dadurch gekennzeichnet, daß als Vorsteuerventilglied ein von der dritten Fläche (47 bzw. 13) umgebener Ventilsitz (5 bzw.15) dient.

16. Ventileinrichtung nach einem der vorhergehenden Ansprüche, dadurch gekennzeichnet, daß die Drosselverbindung (34) zwischen Einlaßkammer (43) und Vorsteuerkammer (40) bzw. zwischen Arbeitskammer und Vorsteuerkammer als Gehäusedurchbruch ausgebildet ist.

17. Ventileinrichtung nach einem der Ansprüche 13 bis 15, dadurch gekennzeichnet, daß die Drosselverbindung (26) zwischen Einlaßkammer und Vorsteuerkammer bzw. zwischen Arbeitskammer (32) und Vorsteuerkammer (24) als im wesentlichen radial angeordneter Durchbruch in einem die Einlaßkammer bzw. die Arbeitskammer (32) durchdringenden Bereich des Schaftes (22) ausgebildet ist.

18. Ventileinrichtung nach Anspruch 1 (1), dadurch gekennzeichnet, daß sie mit einer Ventileinrichtung nach Anspruch 3 (12) zu einer kombinierten Ventileinrichtung zusammengebaut ist.

19. Kombinierte Ventileinrichtung nach Anspruch 18, dadurch gekennzeichnet, daß die Ventileinrichtung nach Anspruch 1 (1) nach einem der Ansprüche 2 oder 5 bis 7, 9, 10, 13, 15 bis 18 und/oder die Ventileinrichtung nach Anspruch 3 (12) nach einem der Ansprüche 4 bis 6, 8, 11 bis 12, 14 bis 18 ausgebildet sind.

## Claims

1. Electromagnetically actuated valve device (1) to control the connection between a pressure medium source and a consumer installation having the features:
a) Between an inlet chamber (43) connected to the pressure medium source, and a working chamber (32) connected to the consumer installation, there is arranged a main valve (45, 46) consisting of a valve seat (45) fixed in the housing and a movable main valve member (46);
b) an adjusting member (42) controlling the movement of the main valve member (46) is provided;
c) a pilot control chamber (40) is provided;
d) the adjusting member (42) is acted on by the inlet pressure on a first surface (6), associated with the inlet chamber (43), in the opening direction of the main valve (45, 46);
e) the adjusting member (42) is acted on by the pressure in the pilot control chamber (40) on a second surface (35), associated with the pilot control chamber (40), in the closing direction of the main valve (45, 46);
f) the second surface (35) is larger than the first surface (6);
g) the pilot control chamber (40) can be connected to the working chamber (32) by way of a pilot control valve (4, 5);
h) the pilot control valve (4, 5) is formed by a movable pilot control valve member (5) and a pilot control valve body (4) which is connected to the armature (2) of the actuating magnet (3);
i) the main valve member (46) and the pilot control valve member (5) are rigidly coupled together in such a way that a movement of the main valve member (46) in the opening direction of the main valve (45, 46) is at the same time a movement of the pilot control valve member (5) in the closing direction of the pilot control valve (4, 5),
characterised by the features:
j) the actuating magnet (3) has a constant current/stroke characteristic;
k) the pilot control chamber (40) is connected to the inlet chamber (43) by way of a throttled connection (34);
l) the throttled connection (34) is such that with a small opening cross-section of the pilot control valve (4, 5) it permits a pressure medium throughput into the pilot control chamber (40) at least as great as the pilot control valve (4, 5) from the pilot control chamber (40) and with an increasing opening cross-section of the pilot control valve (4, 5) permits a smaller pressure medium throughput into the pilot control chamber (40) than the pilot control valve (4, 5) from the pilot control chamber (40).

2. Valve device according to Claim 1, wherein the adjusting member (42) is acted on by the consumer pressure on a third surface (47), associated with the working chamber (32), characterised by the features:
a) the third surface (47) is so arranged on the adjusting member (42) that the pressure bearing on the surface (47) acts on the adjusting member (42) in the closing direction of the main valve (45, 46);
b) an equalization chamber (36), connected to the working chamber (32), is provided with which there is associated a fourth surface (38) of the adjusting member (42) on which the adjusting member (42) is acted on by the pressure in the equalisation chamber (38) in the opening direction of the main valve (45, 46).

3. Electromagnetically actuated valve device (12) to control the relief from pressure of a consumer installation having the features:
a) Between a working chamber (32) connected to the consumer installation, and an outlet chamber (14) connected to an outlet (16), there is arranged a main valve (19, 18) consisting of a valve seat (19) fixed in the housing and a movable main valve member (18); the outlet (16) being at least indirectly connected to a pressure relief space;
b) an adjusting member (21) controlling the movement of the main valve member (18) is provided;
c) a pilot control chamber (24) is provided;
d) the adjusting member (21) is acted on by the consumer pressure on a first surface (7), associated with the working chamber (32), in the opening direction of the main valve (19, 18);
e) the adjusting member (21) is acted on by the pressure in the pilot control chamber (24) on a second surface (30), associated with the pilot control chamber (24), in the closing direction of the main valve (19, 18);
f) the second surface (30) is larger than the first surface (7);
g) the pilot control chamber (24) can be connected to the outlet chamber (14) by way of a pilot control valve (8, 15);
h) the pilot control valve (8, 15) is formed by a movable pilot control valve member (15) and a pilot control valve body (8) which is connected to the armature (10) of the actuating magnet (9);
i) the main valve member (18) and the pilot control valve member (15) are rigidly coupled together in such a way that a movement of the main valve member (18) in the opening direction of the main valve (19, 18) is at the same time a movement of the pilot control valve member (15) in the closing direction of the pilot control valve (8, 15),
characterised by the features:
j) the actuating magnet (9) has a constant current/stroke characteristic;
k) the pilot control chamber (24) is connected to the working chamber (32) by way of a throttled connection (26);
l) the throttled connection (26) is such that with a small opening cross-section of the pilot control valve (8, 15) it permits a pressure medium throughput into the pilot control chamber (24) at least as great as the pilot control valve (8, 15) from the pilot control chamber (24) and with an increasing opening cross-section of the pilot control valve (8, 15) permits a smaller pressure medium throughput into the pilot control chamber (24) than the pilot control valve (8, 15) from the pilot control chamber (24).

4. Valve device according to Claim 3, wherein the adjusting member (21) is acted on by the pressure in the outlet chamber (14) on a third surface (13) associated with the outlet chamber (14),
characterised by the features:
a) the third surface (13) is so arranged on the adjusting member (21) chat the pressure bearing on the surface (13) acts on the adjusting member (21) in the closing direction of the main valve (19, 18);
b) an equalisation chamber (25), connected to the outlet chamber (14), is provided with which there is associated a fourth surface (31) of the adjusting member (21) on which the adjusting member (21) is acted on by the pressure in the equalisation chamber (25) in the opening direction of the main valve (19, 18).

5. Valve device according to one of Claims 1 to 4, characterised in that the actuating magnet (3) has a rising stroke/current characteristic, and so pulls.

6. Valve device according to one of Claims 1 to 4, characterised in that the actuating magnet (9) has a falling stroke/current characteristic, and so pushes.

7. Valve device according to one of Claims 2 or 5 to 6, characterised in that the connection between the working chamber (32) and the equalisation chamber (36) is in the form of a throttled connection (channel 33).

8. Valve device according to one of Claims 4 to 6, characterised in that the connection between the outlet chamber (14) and the equalisation chamber (25) is in the form of a throttled connection.

9. Valve device according to one of Claims 1 to 2 or 5 or 7, characterised by the features:
a) The adjusting member (42) is in the form of a piston consisting of two piston parts (44) and (39) arranged in series and rigidly connected to each other by means of a shank (41);
b) the first surface (6) is arranged on one piston part (44) and the second surface (35) on the other piston part (39), the first surface (6) and the second surface (35) facing towards each other.

10. Valve device according to Claims 2 and 9, characterised in that the third surface (47) is also arranged on one piston part (44) and the fourth surface (38) is also arranged on the other piston part (39).

11. Valve device according to one of Claims 3 to 6 or 8, characterised by the features:
a) The adjusting member (21) is in the form of a piston consisting of two piston parts (20 and 27) arranged in series and rigidly connected to each other by means of a shank (22);
b) the first surface (7) is arranged on one piston part (20) and the second surface (30) on the other piston part (27), the first surface (7) and the second surface (30) facing towards each other.

12. Valve device according to Claims 3 and 11, characterised in that the third surface (13) is also arranged on one piston part (19) and the fourth surface (31) is also arranged on the other piston part (27).

13. Valve device according to one of claims 9 and 10, characterised by the features:
a) One piston part (44) including the first surface (6) serves with a valve seat (46) as the main valve member and at the same time as the pilot control valve member;
b) the shank (41) and one piston part (44) are penetrated by a channel (37) connected to the pilot control chamber (40) and opening within the pilot control valve member (valve seat 5).

14. Valve device according to one of Claims 11 and 12, characterised by the features:
a) One piston part (20) including the first surface (7) serves with a valve seat (18) as the main valve member and at the same time as the pilot control valve member;
b) the shank (22) and one piston part (20) are penetrated by a channel (29) connected to the pilot control chamber (24) and opening within the pilot control valve member (valve seat 15).

15. Valve device according to Claims 2 and 13 or 4 and 14, characterised in that a valve seat (5 or 15) surrounded by the third surface (47 or 13) serves as the pilot control valve member.

16. Valve device according to one of the preceding Claims, characterised in that the throttled connection (34) between the inlet chamber (43) and the pilot control chamber (40) or between the working chamber and the pilot control chamber is in the form of an aperture in the housing.

17. Valve device according to one of claims 13 to 15, characterised in that the throttled connection (26) between the inlet chamber and the pilot control chamber or between the working chamber (32) and the pilot control chamber (24) is in the form of a substantially radially arranged aperture in a region of the shank (22) which penetrates the inlet chamber or the working chamber (32).

18. Valve device according to Claim 1 (1), characterised in that it is assembled with a valve device according to Claim 3 (12) to form a combined valve device.

19. Combined valve device according to Claim 18, characterised in that the valve device according to Claim 1 (1) is constructed according to one of Claims 2 or 5 to 7, 9, 10, 13, 15 to 18 and/or the valve device according to Claim 3 (12) is constructed according to one of Claims 4 to 6, 8, 11 to 12, 14 to 18.

## Revendications

1. Dispositif de soupape (1) actionné électromagnétiquement pour commander la liaison entre une source de média de pression et une installation d'utilisation, présentant les caractéristiques suivantes:
a) une soupape principale constituée d'un siège de soupape (45) solidaire au boîtier et d'un organe de soupape principale (46) mobile est agencée entre une chambre d'admission (43), reliée à la source de média sous pression, et une chambre de travail (32) reliée à l'installation d'utilisation;
b) il est prévu un organe de positionnement (42) commandant le mouvement de l'organe de soupape principale (46);
c) il est prévu une chambre de commande pilote (40);
d) l'organe de positionnement (42) est sollicité par la pression d'admission sur une première surface (6) associée à la chambre d'admission (43) en direction d'ouverture de la soupape principale (45, 46);
e) sur une seconde surface (35) associée à la chambre de commande pilote (40), l'organe de positionnement (42) est sollicité par la pression dans la chambre de commande pilote (40), en direction de fermeture de la soupape principale (45, 46);
f) la seconde surface (35) est plus grande que la première surface (6);
g) la chambre de commande pilote (40) peut être reliée avec la chambre de travail (32) par une soupape pilote (4,5);
h) la soupape pilote (4, 5) est formée par un organe de soupape pilote (5) mobile et un corps de soupape pilote (4) relié avec l'armature (2) de l'aimant d'actionnement (3);
i) l'organe de soupape principale (46) et l'organe de soupape pilote (5) sont accouplés de manière solidaire, de telle sorte qu'un mouvement de l'organe de soupape principale (46) en direction d'ouverture de la soupape principale (45, 46) est en même temps un mouvement de l'organe de soupape pilote (5) en direction de fermeture de la soupape pilote (4, 5),
caractérisé en ce que:
j) l'aimant d'actionnement (3) présente une caractéristique de courant/course constante;
k) la chambre de commande pilote (40) est reliée avec la chambre d'admission (43) par un raccord à étranglement (34);
l) le raccord à étranglement (34) est dimensionné de telle manière que lorsque la section d'ouverture de la soupape pilote (4, 5) est faible, il laisse passer un débit de média sous pression au moins aussi grand dans la chambre pilote que la soupape pilote (4, 5) laisse passer en provenance de la chambre pilote(40), et lorsque la section d'ouverture de la soupape (4, 5) augmente, il laisse passer un débit de média sous pression plus faible dans la chambre pilote (40) que la soupape pilote (4, 5) laisse passer en provenance de la chambre pilote (40).

2. Dispositif de soupape selon la revendication 1 dans lequel l'organe de positionnement (42) est sollicité par la pression d'utilisation sur une troisième surface (47) associée à la chambre de travail (32), caractérisé en ce que
a) la troisième surface (47) est agencée sur l'organe de positionnement (42) de telle sorte que la pression exercée sur celle-ci sollicite l'organe de positionnement (42) en direction de fermeture de la soupape principale (45, 46);
b) il est prévu une chambre de compensation (36) reliée avec la chambre de travail (32), à laquelle est associée une quatrième surface (38) de l'organe de positionnement, sur laquelle l'organe de positionnement (42) est sollicité par la pression dans la chambre de compensation (38) en direction d'ouverture de la soupape principale (45, 46).

3. Dispositif de soupape (12) actionné électromagnétiquement pour la commande de la décharge de pression d'une installation d'utilisation, présentant les caractéristiques suivantes:
a) une soupape principale (19, 18) constituée d'un siège de soupape (19) solidaire au boîtier et d'un organe de soupape principale (18) mobile est agencée entre une chambre de travail (32) reliée à l'installation d'utilisation et une chambre sortie (14) reliée à une sortie (16), la sortie (16) étant au moins indirectement reliée à un espace de décharge de pression;
b) il est prévu un organe de positionnement (21) commandant le mouvement de l'organe de soupape principale (18);
c) il est prévu une chambre de commande pilote (24);
d) l'organe de positionnement (21) est sollicité par la pression d'utilisation sur une première surface (7) associée à la chambre de travail (32) en direction d'ouverture de la soupape principale (19, 18);
e) sur une seconde surface (30) associée à la chambre de commande pilote (24), l'organe de positionnement (21) est sollicité par la pression dans la chambre de commande pilote (24), en direction de fermeture de la soupape principale (19,18);
f) la seconde surface (30) est plus grande que la première surface (7);
g) la chambre de commande pilote (24) peut être reliée à la chambre de sortie (14) par une soupape pilote (8,15);
h) la soupape pilote (8, 15) est formée par un organe de soupape pilote (15) mobile et un corps de soupape pilote (8) relié avec l'armature (10) de l'aimant d'actionnement (9);
i) l'organe de soupape principale (18) et l'organe de soupape pilote (15) sont accouplés de manière solidaire, de telle sorte qu'un mouvement de l'organe de soupape principale (18) en direction d'ouverture de la soupape principale (19, 18) est en même temps un mouvement de l'organe de soupape pilote (15) en direction de fermeture de la soupape pilote (8, 15),
caractérisé en ce que:
j) l'aimant d'actionnement (9) présente une caractéristique de courant/course constante;
k) la chambre de commande pilote (24) est reliée à la chambre de travail (32) par un raccord à étranglement (26);
l) le raccord à étranglement (26) est dimensionné de telle manière que lorsque la section d'ouverture de la soupape pilote (8, 15) est faible, il laisse passer un débit de média sous pression au moins aussi grand dans la chambre pilote (24) que la soupape pilote (8, 15) laisse passer en provenance de la chambre pilote (24), et lorsque la section d'ouverture de la soupape (8, 15) augmente, il laisse passer un débit de média sous pression plus faible dans la chambre pilote (40) que la soupape pilote (8, 15) laisse passer en provenance de la chambre pilote (24).

4. Dispositif de soupape selon la revendication 3, l'organe de positionnement (21) étant sollicité par la pression dans la chambre de sortie (14) sur une troisième surface (13) associée à la chambre de sortie (14), caractérisé en ce que
a) la troisième surface (13) est agencée sur l'organe de positionnement (21) de telle sorte que la pression exercée sur celle-ci sollicite l'organe de positionnement (21) en direction de fermeture de la soupape principale (19, 18);
b) il est prévu une chambre de compensation (25) reliée avec la chambre de sortie (14), à laquelle est associée une quatrième surface (31) de l'organe de positionnement (21), sur laquelle l'organe de positionnement (21) est sollicité par la pression dans la chambre de compensation (25) en direction d'ouverture de la soupape principale (19, 18).

5. Dispositif de soupape selon l'une des revendications 1 à 4, caractérisé en ce que l'aimant d'actionnement (3) présente une caractéristique course/courant montante, donc tirante.

6. Dispositif de soupape selon l'une des revendications 1 à 4, caractérisé en ce que l'aimant d'actionnement (3) présente une caractéristique course/courant tombante, donc poussante.

7. Dispositif de soupape selon l'une des revendications 2 ou 5 à 6, caractérisé en ce que la liaison entre la chambre de travail (32) et la chambre de compensation (36) est réalisée sous forme de raccord à étranglement (canal 33).

8. Dispositif de soupape selon l'une des revendications 4 à 6, caractérisé en ce que la liaison entre la chambre de sortie (14) et la chambre de compensation (25) est réalisée sous forme de raccord à étranglement.

9. Dispositif de soupape selon l'une des revendications 1 à 2 ou 5 ou 7, caractérisé en ce que:
a) l'organe de positionnement (42) est réalisé sous forme de piston en deux: parties de piston (44) et (39) reliées en série l'une à l'autre de manière solidaire par une tige (41);
b) la première surface (6) est agencée sur l'une des parties de piston (44), et la seconde surface (35) sur l'autre partie de piston (39), la première surface (6) et la seconde surface (35) se faisant face.

10. Dispositif selon les revendications 2 et 9, caractérisée en ce que la troisième surface (47) est aussi agencée sur l'une des parties de piston (44) et la quatrième surface (38) est aussi agencée sur l'autre partie de piston (39).

11. Dispositif de soupape selon l'une des revendications 3 à 6 ou 8, caractérisé en ce que:
a) l'organe de positionnement (21) est réalisé sous forme de piston en deux: parties de piston (20) et (27) reliées en série l'une à l'autre de manière solidaire par une tige (22);
b) la première surface (7) est agencée sur l'une des parties de piston (20), et la seconde surface (30) sur l'autre partie de piston (27), la première surface (7) et la seconde surface (30) se faisant face.

12. Dispositif selon les revendications 3 et 11, caractérisée en ce que la troisième surface (13) est aussi agencée sur l'une des parties de piston (19) et la quatrième surface (31) est aussi agencée sur l'autre partie de piston (27).

13. Dispositif de soupape selon l'une des revendications 9 ou 10, caractérisé en ce que:
a) La partie de piston (44) sert avec un siège de soupape (46) renfermant la première surface (6), d'organe de soupape principale et en même temps d'organe de soupape pilote;
b) la tige (41) et la partie de piston (44) sont traversées par un canal (37) relié avec la chambre de commande pilote (40) et débouchant dans l'organe de soupape pilote (siège de soupape 5).

14. Dispositif de soupape selon l'une des revendications 11 ou 12, caractérisé en ce
que:
a) La partie de piston (20) sert avec un siège de soupape (18) renfermant la première surface (7), d'organe de soupape principale et en même temps d'organe de soupape pilote;
b) la tige (22) et la partie de piston (20) sont traversées par un canal (29) relié avec la chambre de commande pilote (24) et débouchant dans l'organe de soupape pilote (siège de soupape 15).

15. Dispositif de soupape selon les revendications 2 et 13 ou 4 et 14, caractérisé en ce qu'un siège de soupape (5 ou 15) entouré par la troisième surface (47 ou 13) sert d'organe de soupape pilote.

16. Dispositif de soupape selon l'une des revendications précédentes, caractérisé en ce que le raccord à étranglement (34) entre la chambre d'admission (43) et la chambre de commande pilote (40) ou entre la chambre de travail et la chambre de commande pilote est réalisé sous forme de passage dans le boîtier.

17. Dispositif de soupape selon l'une des revendications 13 à 15, caractérisé en ce que le raccord à étranglement (26) entre la chambre d'admission et la chambre de commande pilote ou entre la chambre de travail (32) et la chambre de commande pilote (24) est réalisé sous forme de percement essentiellement radial dans une région de la tige (22) traversant la chambre d'admission ou la chambre de travail (32).

18. Dispositif de soupape selon la revendication 1(1), caractérisé en ce qu'il est monté avec un dispositif de soupape selon la revendication 3 (12) pour former un dispositif de soupape combiné.

19. Dispositif de soupape combiné selon la revendication 18, caractérisé en ce que le dispositif de soupape selon la revendication 1(1) est réalisé selon l'une des revendications 2 ou 5, 7, 9, 10, 13, 15 à 18 et/ou en ce que le dispositif de soupape selon la revendication 3 (12) est réalisé selon l'une des revendications 4 à 6, 8, 11 à 12, 14 à 18.
